# EUROPEAN PATENT SPECIFICATION

(11) **EP 1 577 208 B1**
(45) Date of publication and mention of the grant of the patent: **28.07.2010**
(21) Application number: 05006160.5
(22) Date of filing: 21.03.2005
(51) Int. Cl.: B62M 7/02, B62J 17/00, F01N 13/14, F01N 13/08

(54) **Saddle riding type vehicle**
Motorrad
Véhicule de type à selle

(30) Priority: 19.03.2004 JP 2004079599; 30.06.2004 JP 2004194550; 03.03.2005 JP 2005059651
(43) Date of publication of application: 21.09.2005
(60) Divisional application: 07008889.3
(73) Proprietor: Yamaha Hatsudoki Kabushiki Kaisha, Iwata-shi, Shizuoka-ken (JP)
(72) Inventor: Kikuhara, Hiroshi, Iwata-shi Shizuoka-ken (JP); Kawase, Masao, Iwata-shi Shizuoka-ken (JP)
(74) Representative: Grünecker, Kinkeldey, Stockmair & Schwanhäusser Anwaltssozietät

(56) References cited:
- GB-A- 2 392 893
- JP-A- 2 061 312
- JP-A- 3 134 216
- JP-A- 3 237 211
- JP-A- 5 077 776
- JP-A- 56 135 708
- JP-A- 2003 054 464
- JP-U- 3 122 992
- US-A- 4 645 028
- US-A- 5 036 947
- US-A- 5 183 130

## Description

The invention relates to a saddle riding type vehicle according to the preamble of independent claim 1.

Such saddle riding type vehicle can be taken from prior art document US 5,183130. In particular, said document teaches a muffler body surrounded by an air guide cover. Thus, a cooling chamber allowing flow of cooling air is defined between the outer surface of the muffler body and the inner surface of the air guide cover. Said air guide cover is formed at its rear end portion with an air outlet opening downwardly directed to the outside. According to said prior art device, the length of the respective passages defined between the muffler body and the air guide cover are different depending on the location of the respective passage. Furthermore, due to the specific arrangement of the air introduction port as well as the exhaust pipe connecting part, the air that flows around the muffler body is heated up in a non-uniform manner, so that air discharged from the air outlet at the rear end of the cover may have different temperature values, such that there would be a risk of creating undesired hot spots.

These days, a saddle riding type vehicle in which a muffler is covered by a cowl, etc. is well known in the art. Besides, Japanese Registration Utility Model No. 25113425 and Japanese Patent No. 2723311 disclose that a passage through which air can flow is defined between a muffler and a cowl to allow heat existing between the muffler and the cowl to be discharged to the outside when the saddle riding type vehicle runs.

However, in the case that the saddle riding type vehicle is stopped or runs at a low speed, since it is difficult of air to flow through the passage defined between the muffler and the cowl, the heat existing between the muffler and the cowl cannot be efficiently discharged to the outside.

Regarding the above, it is an object of the present invention to provide a saddle riding type vehicle as indicated above, which is capable of effectively insulating heat existing between a muffler and a cowl, wherein creation of hot spots is minimized.

It is, therefore, an object of the invention to provide an improved saddle riding type vehicle capable of effectively insulating heat existing between a muffler and a cowl.

According to the subject matter of the present invention, said objective is solved by a saddle riding type vehicle having the features of independent claim 1.

Further, preferably a seat for placement of a rider of the saddle riding type vehicle is installed above the rear wheel, and/or in that the muffler is substantially cylindrical, and/or in that the muffler and/or the exhaust pipe extend obliquely upwardly towards a rear portion of the vehicle, and/or in that the heat discharge device is provided capable of discharging heat towards the rear wheel.

Furthermore, preferably the body frame includes a rear frame which is installed above the rear wheel, the muffler is arranged outside the rear frame in a widthwise direction of the vehicle, wherein preferably the heat discharge device is disposed in a space which is surrounded by the muffler, the rear wheel and/or the rear frame.

Still further, the heat discharge device comprises a case and a fan unit, wherein preferably a bottom wall of the case has a discharge opening through which the heat discharged out of the heat insulation space by the fan unit is dischargeable out of the case.

Also, preferably the muffler comprises a plurality of mufflers, wherein preferably a rear frame of the vehicle is installed between the plurality of mufflers.

Further, preferably the fan unit is installed below a center of an exhaust outlet of the muffler, through which exhaust gas of the engine is dischargeable to the outside.

Moreover, preferably the cover member has an outside air suction port through which outside air is introduceable into the heat insulation space and an air discharge port which communicates with the heat discharge device and/or in that the cover member has at least one projection which projects into the heat insulation space, wherein preferably the projection is installed adjacent to the air discharge port.

Further, preferably the case comprises an upper case part and a lower case part which is coupled to the upper case part, wherein preferably the upper case part has a suction opening which communicates with the heat insulation space, and/or wherein the lower case part as the discharge opening.

Furthermore, preferably the fan unit comprises a fan and an electric motor for rotating the fan, wherein, preferably, the electric motor is fastened to the rear frame by an electric motor fastening member, wherein, further preferably, the electric motor fastening member has an opening at a position which corresponds to the suction opening.

Also, preferably a catalyst for purifying exhaust gas of the engine is installed between the engine and the muffler, preferably closer to the engine than to an air discharge port of the muffler.

Further, preferably the cover member is made of a resin material and/or in that the cover member comprises an outer cover part which externally covers the muffler in a widthwise direction of the vehicle, and/or an inner cover part which is positioned between a rear frame of the vehicle and the muffler, wherein, preferably, a heat insulation material for insulating heat of the muffler is provided in the heat insulation space.

Furthermore, preferably a heat insulation sheet for insulating heat of the muffler is installed on an inner surface of the cover member, in particular adjacent to the air discharge port and/or in that the body frame has an outer surface which has a plate-shaped contour when viewed in the widthwise direction of the vehicle.

Still further, preferably a rear frame of the vehicle has a narrow width part which has a width less than that of the body frame, wherein preferably the muffler is installed outside the narrow width part in the widthwise direction of the vehicle.

Also, preferably a rear frame of the vehicle has a horizontal plate part which is substantially parallel to a rotation axis of the rear wheel and/or has a side wall part which extends substantially vertically from an edge of the horizontal plate part, wherein preferably a portion of the side wall part which is connected to the body frame has a height greater than that of the other portion of the side wall part.

Furthermore, preferably a rear frame of the vehicle is connected to the body frame by a locking member, wherein preferably the locking member is covered by the cover member.

Further preferred embodiments of the invention are subject to the respective subclaims.

In the following, the invention will be described in greater detail by means of preferred embodiments thereof with reference to the attached drawings, wherein:
Fig. 1 is a view illustrating an outer appearance of a saddle riding type vehicle in accordance with a first embodiment of the present invention;
Fig. 2 is a schematic view illustrating a cooling device and its neighboring main component elements according to the first embodiment of the present invention;
Fig. 3 is a view illustrating the neighboring main component elements of the cooling device according to the first embodiment of the present invention;
Fig. 4 is a perspective view illustrating a main part of the saddle riding type vehicle according to the first embodiment of the present invention; and
Fig. 5 is a view illustrating an outer appearance of a saddle riding type vehicle in accordance with a second embodiment of the present invention.

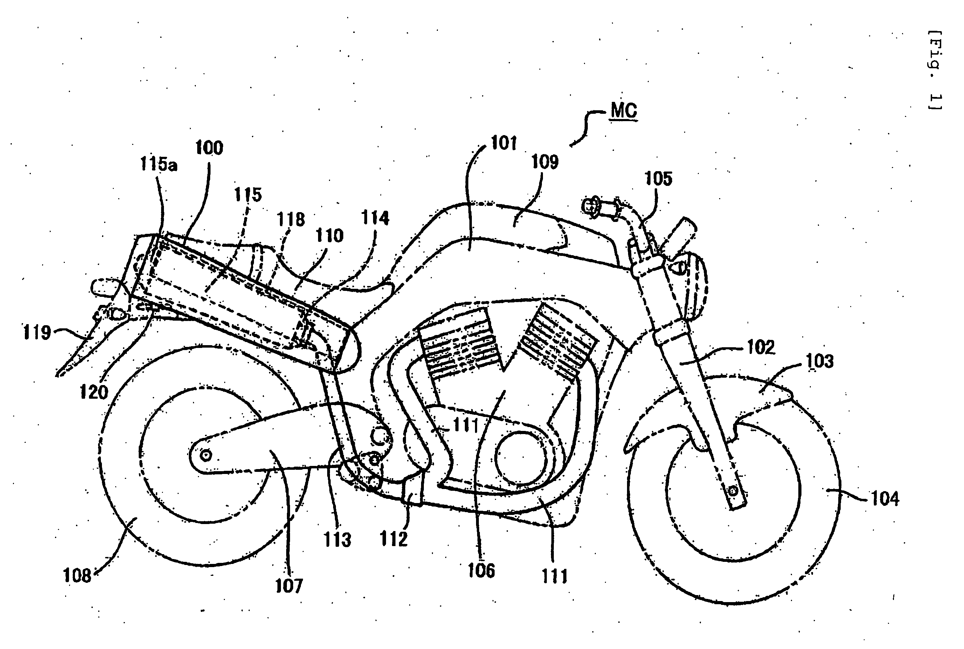

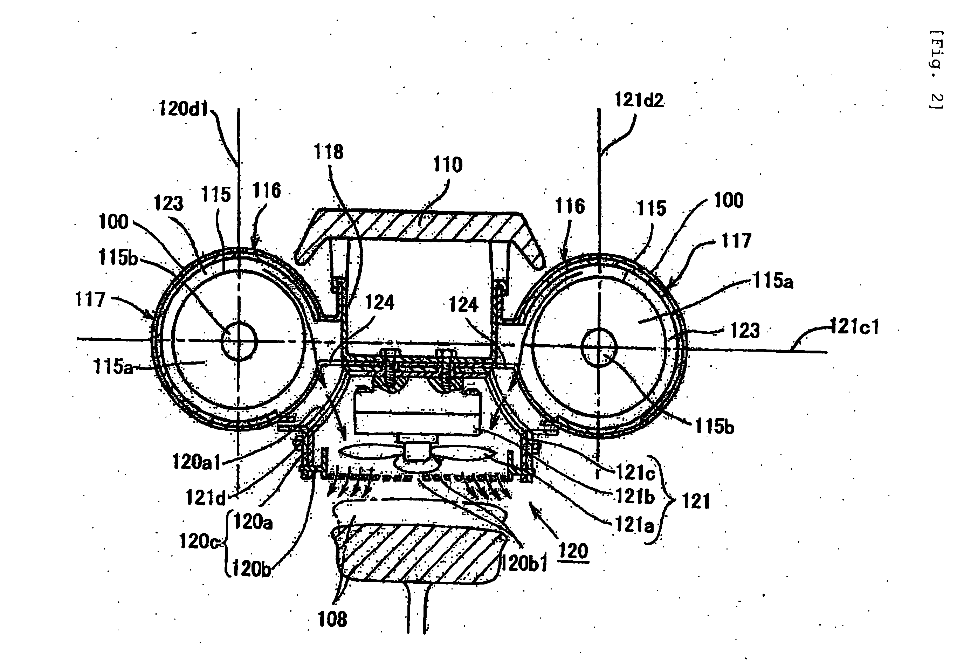

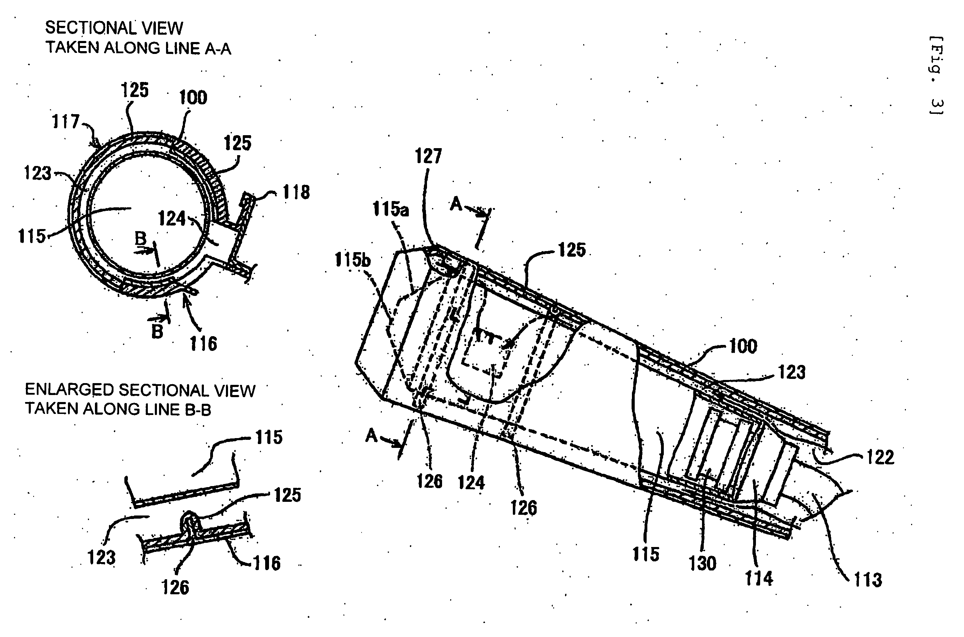

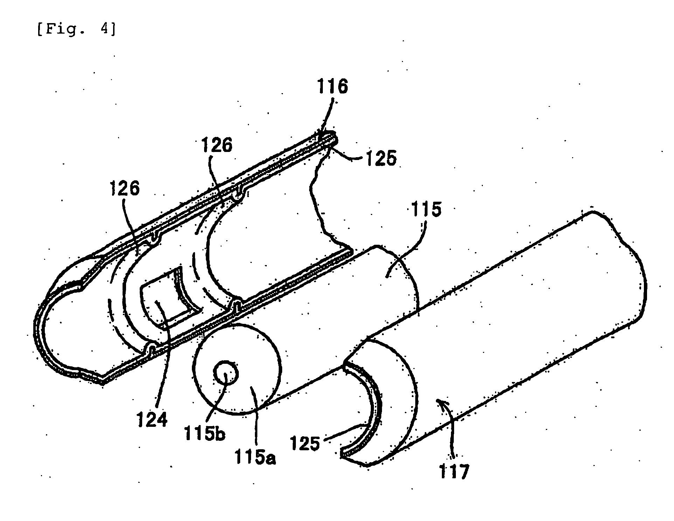

In the following, a first embodiment of the invention will be described. Therein: Fig. 1 is a side view illustrating main component elements of a saddle riding type vehicle in accordance with a first embodiment of the present invention. Fig. 2 is a schematic view taken by viewing the saddle riding type vehicle shown in Fig. 1 from the rear. Fig. 3 is schematically sectional views illustrating several component elements of the saddle riding type vehicle shown in Fig. 1. Fig. 4 is a perspective view illustrating a part of the saddle riding type vehicle shown in Fig. 1.

In Fig. 1, the reference symbol MC designates a saddle riding type vehicle on which a rider can ride by outstretching legs. The saddle riding type vehicle comprises a body frame 101, a front fork 102 rotatably mounted to a front end of the body frame 101, and a front fender 103 installed on a portion of the front fork 102. A front wheel (tire) 104 is rotatably mounted to a lower end of the front fork 102, and a steering handle 105 is mounted to an upper end of the front fork 102. A 'V'-shaped two-cylinder air-cooling type engine (heat resistant engine) 106 is installed below the body frame 101. A swing arm 107 is pivotably mounted to a lower rear end of the body frame 101, and a rear wheel (tire) 108 is rotatably mounted to a distal end of the swing arm 107. A fuel tank 109 is installed on the body frame 101, and a seat 110 is installed to extend from the fuel tank 109 installed on the body frame 101 toward a position above the rear wheel 108.

Among two pairs of front exhaust pipes 111 which are connected to exhaust ports of the engine 106 at both sides of the saddle riding type vehicle, two front exhaust pipes 111 l which are provided on each side of the saddle riding type vehicle are joined with each other at a joining part 112 (only two front exhaust pipes 111 provided on one side of the saddle riding type vehicle are illustrated, and only one joining part 112 is illustrated). A muffler (silencer) 115 is connected to a rear end 114 of a rear exhaust pipe 113 which extends rearward from the joining part 112 (only one rear exhaust pipe 113 is illustrated). A cover member (cowl) 100 which has a cylindrical configuration surrounds a circumferential outer surface of the muffler 115. The cover member 100 comprises a semi-cylindrical fender 116 and a semi-cylindrical side cover 117. A rear frame 118 is installed to be connected to the body frame 101 below the seat 110 and above the rear wheel 108. A pair of mufflers 115 are installed at both sides of the rear frame 118. By this fact, an air discharge device 120 as will be described below can be installed in a space defined between the pair of mufflers 115.

The heat discharge device (a cooling device) 120 is disposed in a space which is surrounded by a rear fender 119 extending from the rear frame 118 above the rear wheel 108, a pair of mufflers 115, the rear wheel 108 and the rear frame 118. The heat discharge device 120 is securely held with respect to the rear frame 118 by a holding member which extends through the cover member 100.

The heat discharge device 120 is connected to a heat insulation space 123 which is defined between the muffler 115 and the cover member 100. The heat discharge device 120 functions to discharge air existing in the heat insulation space 123 to the outside and to cool the heat generated by the rearward embedded type muffler 115.

The cover member 100 has an air suction port 122 through which air is introduced into the heat insulation space 123 and an air discharge port 124. Due to this fact, the air existing in the heat insulation space 123 can be effectively discharged to the outside.

A heat insulation sheet 125 is installed on a circumferential inner surface of the cover member 100 at least adjacent to the air discharge port 124 to insulate heat generated adjacent to the air discharge port 124. Ribs 126 are projectedly formed on the circumferential inner surface of the cover member 100 adjacent to the air discharge port 124. By this fact, the air existing in the heat insulation space 123 can be effectively discharged through the air discharge port 124.

A catalyst 130 is installed on a circumferential inner surface of the muffler 115 upstream of the air discharge port 124 of the heat insulation space 123. The catalyst 130 is composed of ceramic which is coated with noble metal such as platinum, palladium, rhodium, etc. and a filter. The catalyst 130 functions to cause a chemical reaction of hydrocarbon (HC) contained in unburned gas and bum noxious carbon monoxide in the muffler 115. Therefore, it is possible to efficiently purify exhaust gas.

A muffler cap 115a is installed at an exhaust outlet 115b of the muffler 115.

Due to the fact that the two front exhaust pipes 111 which are provided on each side of the saddle riding type vehicle and extend rearwards from the 'V'-shaped two-cylinder air-cooling type engine 106 are joined with each other at the joining part 112, two rear exhaust pipes 113 extend rearwards and upwards from the joining parts 112. The pair of left and right mufflers 115 is respectively connected to the ends 114 of the rear exhaust pipes 113. The pair of left and right mufflers 115 is located at both sides of the seat (tandem seat) 110 for a driver and a rider which are placed above the rear wheel 108, and slopingly extend rearwards and upwards.

The heat discharge device 120 according to this first embodiment is installed in a space (which is not employed in the conventional art) which is defined in a rear part of the saddle riding type vehicle and is delimited by the left and right mufflers 115, the rear wheel 108 supported by the pivotable swing arm 107 (at an uppermost position when the rear wheel 108 is moved upward and downward), and the rear frame 118. For this reason, the air of a high temperature which exists in the heat insulation space 123 can be efficiently discharged to the outside through the space while not deteriorating an outer appearance of the saddle riding type vehicle.

The heat discharge device 120 comprises a case 120c which includes an upper cover 120a and a lower cover 120b coupled to the upper cover 120a, and a fan unit 121 which is accommodated in the case 120c. The upper cover 120a has a suction opening 120a1 which communicates with the heat insulation space 123, and a bottom wall of the lower cover 120b has a discharge opening 120b1 which is opposite to the seat 110 and through which the air sucked from the heat insulation space 123 by the fan unit 121 can be discharged to the outside. By this fact, it is possible to prevent heat from being transferred to a rider.

The fan unit 121 is located below a center of the exhaust outlet 115b which is defined at a rear end of the muffler 115. Thus, it is possible to prevent a widthwise size of the saddle riding type vehicle from increasing due to the provision of the fan unit 121. The fan unit 121 comprises a fan 121a, a motor 121b for rotating the fan 121a, and a motor fastening part 121c for fastening the motor 121b to the rear frame 118. The motor 121b is fastened to the rear frame 118 by the motor fastening part 121 c.

The motor fastening part 121c has a fan opening 121d at a position which corresponds to the suction opening 120a1 of the upper cover 120a. Hence, the air existing in the heat insulation space 123 can be reliably guided into the case 120c.

The fan unit 121 according to the first embodiment comprises an electric fan unit wherein the fan 121a is rotated by the motor 121b which employs a battery as its power source. Through the rotation of the fan 121a, a low pressure zone is created adjacent to the discharge opening 120b1 which is defined in the bottom wall of the lower cover 120b. Accordingly, the air sucked through the air suction port 122 (see Fig. 3) defined between the muffler 115 and the cover member 100 at the end 114 of the rear exhaust pipe 113, which is connected to a front end of the muffler 115, passes through the heat insulation space 123 (an air flowing passage) defined between the circumferential outer surface of the muffler 115 and the circumferential inner surface of the cover member 100, cools the muffler 115 and the cover member 100 (comprising the fender 116 and the side cover 117), and is warmed up by the heat of the muffler 115 and the cover member 100. Then, the warmed-up air sequentially passes through the air discharge port 124 which is defined through the fender 116 and the suction opening 120a1 of the upper cover 120a of the heat discharge device 120 and is discharged toward the rear wheel 108 through the discharge opening 120b1 which is defined through the bottom wall of the lower cover 120b (and faces the ground).

In this first embodiment, at least one additional suction opening for introducing air into the heat insulation space 123 may be defined through a wall of the side cover 117. A louver capable of changing an air flowing direction may be installed in the discharge opening 120b1 of the lower cover 120b, as a result of which warmed-up air can be efficiently discharged to a space between the fender 116 and the rear wheel 108.

The fender 116 and the side cover 117 constitute the cover member 100 having a cylindrical configuration and surround the circumferential outer surface of the muffler 115. The heat insulation sheet 125 (having a thickness of 0.1-4 mm) is attached to the inner surfaces of the fender 116 and the side cover 117 adjacent to the air discharge port 124 (see Fig. 3). The heat insulation sheet 125 may be attached only to the inner surface of the fender 116.

The air discharge port 124 defined through each of the left and right fenders 116 communicates with the suction opening 120a1 defined through the upper cover 120a of the heat discharge device 120. The low pressure zone is created adjacent to the discharge opening 120b1 by the fan unit (a cooling fan unit) 121, by which air flow is created in the heat insulation space 123 defined between the muffler 115 and the cover member 100. Consequently, as the heated air is discharged toward the rear wheel 108 through the discharge opening 120b1 defined in the lower cover 120b, the heated air is prevented from being transferred to the rider.

As can be readily seen from Fig. 2, the fan unit 121 of the heat discharge device 120 is attached to the rear frame 118 at a region (a fan space) adjacent to the rear wheel 108 in a space which is delimited by a horizontal axis 121c1 passing through centers of the exhaust outlets 115b (tail pipes) of the left and right muffler caps 115a and vertical axes 121d1 and 121 d2 respectively passing through the centers of the exhaust outlets 115b of the left and right muffler caps 115a.

Also, in place of the fan unit 121 installed in the fan space, a pair of electric fans may be installed adjacent to the pair of suction openings 120a1, respectively. Moreover, in addition to the fan unit 121, the pair of electric fans may be installed adjacent to the pair of suction openings 120a1, respectively.

When viewed on a section taken by passing through the exhaust outlets 115b of the left and right muffler caps 115a, the air discharge port 124 defined through each of the left and right fenders 116 vertically passes through the horizontal axis 121c1 which is defined by a line connecting the centers of the exhaust outlets 115b of the left and right muffler caps 115a and has a predetermined vertical length.

Due to the fact that a plurality of ribs 126 (prominent members) are projectedly formed in the contact vicinity of inner surface of the fender 116 which surrounds the muffler 115 (that is, at a region which is liable to be heated), the air flowing passage (of a thickness of about 15 mm) for efficient flow of air from the front end of the muffler 115 toward the rear end of the muffler 115 is defined in the heat insulation space 123 defined between the muffler 115 and the cover member 100. The ribs 126 are covered with the heat insulation sheet 125.

In the first embodiment, the ribs 126 are not necessarily needed, and without the ribs 126, an original purpose of ensuring reliable air flow can be achieved.

The catalyst 130 is located on a portion of the circumferential outer surface of the muffler 115 which is most likely to be heated (the circumferential outer surface of the muffler 115 reaches a temperature of about 400°C). A temperature sensor 127 is installed adjacent to the catalyst 130 (see Fig. 3). In response to a signal from the temperature sensor 127, the fan unit 121 is turned on or off and a rotational speed of the fan 121a is controlled.

In a normal running condition, air is introduced into the heat insulation space 123 through the air suction port 122 defined at the front end of the muffler 115. If the muffler 115 is cooled, a temperature sensed by the temperature sensor 127 is less than a predetermined temperature. In this situation, the fan unit 121 is turned off, or an rpm of the fan 121 a is controlled to be decreased.

In the case that the saddle riding type vehicle is stopped or runs at a low speed, a sufficient amount of air is not introduced into the heat insulation space 123 through the air suction port 122 defined at the front end of the muffler 115, and a temperature sensed by the temperature sensor 127 is higher than the predetermined temperature. At this time, the fan unit 121 is turned on, and an rpm of the fan 121a is controlled to be increased.

The fan unit 121 controls a rotational speed of the fan 121 a in response to a signal from the temperature sensor 127. For example, when a temperature sensed by the temperature sensor 127 is high, a rotational speed of the fan 121a is increased, and when a temperature sensed by the temperature sensor 127 is low, a rotational speed of the fan 121 a is decreased.

Even when the engine 106 is stopped, in the case that a temperature of the muffler 115 sensed by the temperature sensor 127 is higher than the predetermined temperature, the fan unit 121 may be driven.

The fan unit 121 installed in the heat discharge device 120 according to the first embodiment, which is installed in the heat discharge device 120, is not limited to the electric fan, and instead, a fan unit employing a hydraulic motor as a driving source, a fan unit driven by exhaust gas, etc. can be adopted.

Further, while the saddle riding type vehicle according to the first embodiment may have a 'V'-shaped four-cylinder engine. In this case, two pairs of the front exhaust pipes are connected by joining parts, respectively.

The pair of left and right mufflers 115, the present invention is not limited to the number of mufflers. Therefore, the saddle riding type vehicle may have a single muffler.

### (Second Embodiment)

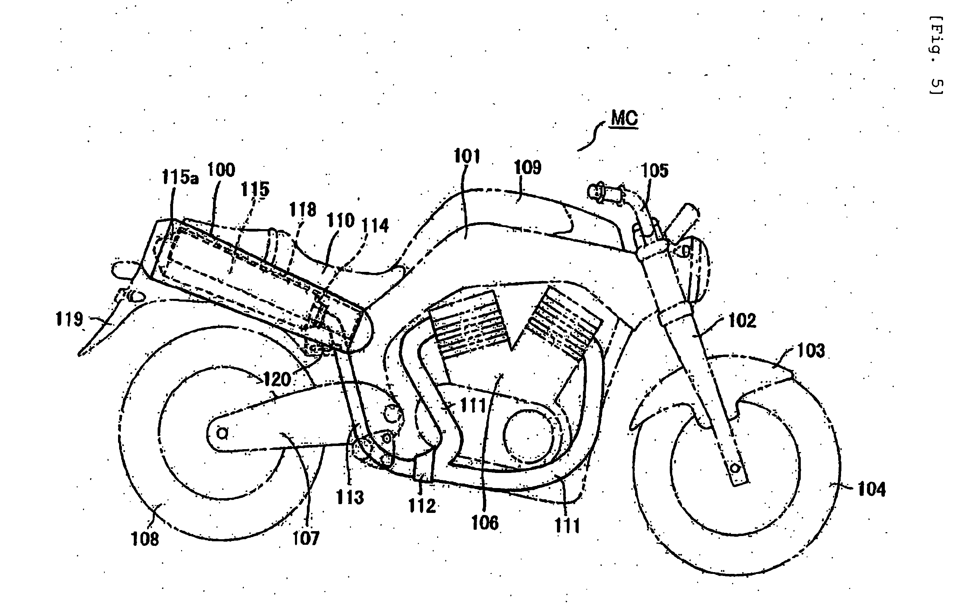

Hereafter, a saddle riding type vehicle according to a second embodiment of the present invention will be described. In the following explanation, differences between the second and first embodiments will be mainly described. Fig. 5 is a schematic view illustrating a main part of the saddle riding type vehicle according to the second embodiment of the present invention.

As shown in Fig. 5, in this second embodiment, the heat discharge device 120 is located in a space which is surrounded by the mufflers 115, the swing arm 107 and the rear wheel 108. The heat discharge device 120 is connected to the heat insulation space 123 which is defined by the exhaust outlet 115b and the cover member 100, and functions to discharge air existing in the heat insulation space 123 to the outside.

By the saddle riding type vehicle according to this second embodiment, the same effects as those of the first embodiment can be achieved.

The above description discloses a saddle riding type vehicle comprising a body frame (a body frame 101), a rear wheel (a rear wheel 108) rotatably attached to the body frame, an engine (an engine 106) installed on the body frame, a substantially cylindrical muffler (a muffler 115) connected to an exhaust pipe (a rear exhaust pipe 113) which extends from the engine and obliquely installed rearwards of the rear wheel, and a cover member (a cover member 100) for axially surrounding the muffler, wherein a heat insulation space (a heat insulation space 123) is defined between the muffler and the cover member to insulate heat of the muffler.

Due to the fact that the heat insulation space (the heat insulation space 123) is defined between the muffler and the cover member to insulate heat of the muffler, the saddle riding type vehicle can effectively insulate heat existing between the muffler and the cover member.

The saddle riding type vehicle further comprises a heat discharge device (a heat discharge device 120) communicated with the heat insulation space to discharge heat existing in the heat insulation space out of the heat insulation space.

Thereby, it is possible to efficiently discharge the heat existing between the muffler and the cover member.

Preferably, a seat (a seat 110) on which a driver of the saddle riding type vehicle sits is installed above the rear wheel, and the heat discharge device discharges heat toward the rear wheel.

Due to the fact that the heat discharge device can discharge heat existing between the muffler and the cover member toward the rear wheel, the saddle riding type vehicle can suppress heat from being transferred to a rider.

Preferably, the body frame includes a rear frame (a rear frame 118) which is installed above the rear wheel, the muffler is arranged outside the rear frame in a widthwise direction of the saddle riding type vehicle, and the heat discharge device is disposed in a space which is surrounded by the muffler, the rear wheel and the rear frame.

By this feature, due to the fact that the heat discharge device is disposed in the space which is surrounded by the muffler, the rear wheel and the rear frame, it is possible to prevent an outer appearance of the saddle riding type vehicle from being deteriorated due to the presence of the heat discharge device.

The heat discharge device comprises a case (a case 120c) and a fan unit (a fan unit 121), and a bottom wall of the case has a discharge opening (a discharge opening 120b1) through which the heat discharged out of the heat insulation space by the fan unit is discharged out of the case.

By this feature, due to the fact that the heat discharge device has the discharge opening through which the heat discharged out of the heat insulation space by the fan unit is discharged out of the case, the saddle riding type vehicle can suppress heat from being transferred to a rider.

Preferably, the muffler comprises a plurality of mufflers, and the rear frame is installed between the plurality of mufflers.

By this feature, due to the fact that the rear frame is installed between the plurality of mufflers, it is possible to locate the heat discharge device by efficiently using the space which is surrounded by the plurality of mufflers, the rear wheel and the rear frame.

Preferably, the fan unit is installed below a center (a horizontal axis 121c1) of an exhaust outlet (an exhaust outlet 115b) of the muffler, through which exhaust gas of the engine is discharged to the outside.

By this feature, due to the fact that the fan unit is installed below the center of the exhaust outlet of the muffler, it is possible to prevent a widthwise size of the saddle riding type vehicle from increasing due to the presence of the fan unit.

Preferably, the cover member has an outside air suction port (an air suction port 122) through which outside air is introduced into the heat insulation space and an air discharge port (an air discharge port 124) which communicates with the heat discharge device.

By this feature, due to the fact that the cover member has the outside air suction port through which outside air is introduced into the heat insulation space and the air discharge port which communicates with the heat discharge device, the saddle riding type vehicle can efficiently discharge the heat existing between the muffler and the cover member.

Preferably, the cover member has at least one projection (a rib 126) which projects into the heat insulation space, and the projection is installed adjacent to the air discharge port.

By this feature, due to the fact that the cover member has at least one projection which projects into the heat insulation space, the saddle riding type vehicle can increase an air flow rate between the muffler and the cover member and efficiently discharge the heat existing between the muffler and the cover member.

Preferably, the case comprises an upper case part (an upper cover 120a) and a lower case part (a lower cover 120b) which is coupled to the upper case part, the upper case part has a suction opening (a suction opening 120a1) which communicates with the heat insulation space, and the lower case part has a discharge opening (a discharge opening 120b1).

By this feature, due to the fact that the case comprises the upper case part having the suction opening and the lower case part having the discharge opening, the case can be easily formed.

Preferably, the fan unit comprises a fan (a fan 121a) and an electric motor (a motor 121 b) for rotating the fan, and the electric motor is fastened to the rear frame by an electric motor fastening member (a motor fastening part 121 c).

By this feature, due to the fact that the electric motor is fastened to the rear frame by the electric motor fastening member, it is possible to securely fasten the electric motor to the rear frame.

Preferably, the electric motor fastening member has an opening (a fan opening 121d) at a position which corresponds to the suction opening.

By this feature, due to the fact that the electric motor fastening member has the opening at the position which corresponds to the suction opening, the saddle riding type vehicle can easily introduce the heat existing between the muffler and the cover member into the case.

Preferably, a catalyst (a catalyst 130) for purifying exhaust gas of the engine is installed between the engine and the muffler closer to the engine than the air discharge port.

By this feature, due to the fact that the catalyst is installed between the engine and the muffler, the saddle riding type vehicle can efficiently purify the exhaust gas.

## Claims

1. Saddle riding type vehicle comprising:
a body frame (101, 208), a rear wheel (108, 211) rotatable attached to the body frame (101, 208),
an engine (106, 210) installed on the body frame (101, 208),
a muffler (115, 220, 220) connected to an exhaust pipe (113, 213) which extends from the engine (106, 210) in a rearward direction,
a cover member (100, 203) for at least partially axially surrounding the muffler (115, 220) is provided, wherein a heat insulation space (123) is defined between the muffler (115, 220) and the cover member (100, 203) for insulating a heat of the muffler (115, 220),
a heat discharge device (120) configured to communicate with said heat insulation space (123) and to discharge a heat existing in the heat insulation space (123) out of the heat insulation space (123)
**characterized in that**
said heat discharge device (120) comprises a fan unit (121) in a case (120c) having a discharge opening (120b1) through which the heat is discharged towards outside, said fan unit (121) creates a low pressure zone adjacent to said discharge opening (120b1).

2. Saddle riding type vehicle according to claim 1, **characterized in that** a seat (110) for placement of a rider of the saddle riding type vehicle is installed above the rear wheel (108, 211), and/or **in that** the muffler (115, 220) is substantially cylindrical, and/or **in that** the muffler (115, 220) and/or the exhaust pipe (113, 213) extend obliquely upwardly towards a rear portion of the vehicle, and/or **in that** the heat discharge device (120) is provided capable of discharging heat towards the rear wheel (108, 211).

3. Saddle riding type vehicle according to claims 1 and 2, **characterized in that** the body frame (101, 208) includes a rear frame (118, 225) which is installed above the rear wheel (108,211), the muffler (115, 220) is arranged outside the rear frame (118, 225) in a widthwise direction of the vehicle, wherein preferably the heat discharge device (120) is disposed in a space which is surrounded by the muffler (115, 220), the rear wheel (108, 211) and/or the rear frame (118, 225).

4. Saddle riding type vehicle according to at least one of the claims 1 to 3, **characterized in that** said discharge opening is disposed in a bottom wall of the case (120c).

5. Saddle riding type vehicle according to at least one of the claims 1 to 4, **characterized in that** the muffler (115, 220) comprises a plurality of mufflers (115, 220, 115, 220), wherein preferably a rear frame (118, 225) of the vehicle is installed between the plurality of mufflers (115, 220, 115, 220).

6. Saddle riding type vehicle according to at least one of the claims 1 to 5, **characterized in that** the fan unit (121) is installed below a center of an exhaust outlet (115, 220b) of the muffler (115, 220), through which exhaust gas of the engine (106, 210) is dischargeable to the outside.

7. Saddle riding type vehicle according to at least one of the claims 1 to 6, **characterized in that** the cover member (100, 203) has an outside air suction port (122) through which outside air is introduceable into the heat insulation space (123) and an air discharge port (124) which communicates with the heat discharge device (120) and/or in that the cover member (100, 203) has at least one projection (126) which projects into the heat insulation space (123), wherein preferably the projection (126) is installed adjacent to the air discharge port (124).

8. Saddle riding type vehicle according to at least one of the claims 1 to 7, **characterized in that** the case (120c) comprises an upper case part (120a) and a lower case part (120b) which is coupled to the upper case part (120a), wherein preferably the upper case part (120a) has a suction opening (120a1) which communicates with the heat insulation space (123), and wherein the lower case part (120b) has the discharge opening (120b1).

9. Saddle riding type vehicle according to at least one of the claims 1 to 8, **characterized in that** the fan unit (121) comprises a fan (121a) and an electric motor (121 b) for rotating the fan (121a), wherein preferably, the electric motor (121b) is fastened to the rear frame (118, 225) by an electric motor fastening member (121c), wherein, further preferably, the electric motor fastening member (121c) has an opening (121 d) at a position which corresponds to the suction opening.

10. Saddle riding type vehicle according to at least one of the claims 1 to 9, **characterized in that** a catalyst (130) for purifying exhaust gas of the engine (106, 210) is installed between the engine (106, 210) and the muffler (115, 209), preferably closer to the engine (106, 210) than to an air discharge port (124) of the muffler (115, 220).

## Patentansprüche

1. Fahrzeug vom Spreizsitz- Typ, aufweisend:
einen Karosserierahmen (101, 208), ein Hinterrad (108, 211), drehbar mit dem Karosserierahmen (101, 208) verbunden,
eine Brennkraftmaschine (106, 210), installiert an dem Karosserierahmen (101, 208),
einen Schalldämpfer (115, 220, 220), verbunden mit dem Abgasrohr (113, 213), der sich von der Brennkraftmaschine (106, 210) in eine Richtung nach hinten erstreckt,
wobei ein Abdeckteil (100, 203), um zumindest teilweise den Schalldämpfer (115, 220) axial zu umgeben, vorgesehen ist, wobei ein wärmeisolierender Raum (123) zwischen dem Schalldämpfer (115, 220) und dem Abdeckteil (100, 203) zum Isolieren einer Wärme des Schalldämpfers (115, 220) gebildet ist,
eine Wärmeabgabevorrichtung (120), konfiguriert, um mit dem wärmeisolierenden Raum (123) in Verbindung zu sein und um eine Wärme, die in dem wärmeisolierenden Raum (123) vorhanden ist, nach außerhalb des wärmeisolierenden Raumes (123) abzugeben,
**dadurch gekennzeichnet, dass**
die Wärmeabgabevorrichtung (120) eine Lüftereinheit (121) in einem Gehäuse (120) aufweist, das eine Auslassöffnung (120b1) hat, durch die die Wärme in Richtung nach außen abgegeben wird, wobei die Lüftereinheit (121) eine Niederdruckzone, benachbart zu der Auslassöffnung (120b1), erzeugt.

2. Fahrzeug vom Spreizsitz- Typ nach Anspruch 1, **dadurch gekennzeichnet, dass** ein Sitz (110) zum Platzieren eines Fahrers des Fahrzeuges vom Spreizsitz- Typ oberhalb des Hinterrades (108, 211) installiert ist und / oder **dadurch**, dass der Schalldämpfer (115, 220) im Wesentlichen zylindrisch ist und / oder **dadurch**, dass sich der Schalldämpfer (115, 220) und / oder das Abgasrohr (113, 213) schräg nach oben in Richtung zu einer hinteren Position des Fahrzeuges erstrecken und / oder **dadurch**, dass die Wärmeabgabevorrichtung (120) vorgesehen ist, in der Lage zu sein, Wärme in Richtung zu dem Hinterrad (108, 211) abzugeben.

3. Fahrzeug vom Spreizsitz- Typ nach den Ansprüchen 1 und 2, **dadurch gekennzeichnet, dass** der Karosserierahmen (101, 208) einen hinteren Rahmen (118, 225) enthält, der oberhalb des Hinterrades (108, 211) angeordnet ist, der Schalldämpfer (115, 220) außerhalb des hinteren Rahmens (118, 225) in einer Richtung der Breite des Fahrzeuges angeordnet ist, wobei vorzugsweise die Wärmeabgabevorrichtung (120) in einem Raum angeordnet ist, der durch den Schalldämpfer (115, 220), das Hinterrad (108, 211) und / oder den hinteren Rahmen (118, 225) umgeben ist.

4. Fahrzeug vom Spreizsitz- Typ nach zumindest einem der Ansprüche 1 bis 3, **dadurch gekennzeichnet, dass** die Abgabeöffnung in einer Bodenwand des Gehäuses (120c) angeordnet ist.

5. Fahrzeug vom Spreizsitz- Typ nach zumindest einem der Ansprüche 1 bis 4, **dadurch gekennzeichnet, dass** der Schalldämpfer (115, 220) eine Mehrzahl von Schalldämpfern (115, 220, 115, 220) aufweist, wobei vorzugsweise ein hinterer Rahmen (118, 225) des Fahrzeuges zwischen der Mehrzahl von Schalldämpfern (115, 220, 115, 220) installiert ist.

6. Fahrzeug vom Spreizsitz- Typ nach zumindest einem der Ansprüche 1 bis 5, **dadurch gekennzeichnet, dass** die Lüftereinheit (121) unter einer Mitte eines Abgasauslasses (115, 220b) des Schalldämpfers (115, 220) angeordnet ist, durch die Abgas der Brennkraftmaschine (106, 210) nach außen abgebbar ist.

7. Fahrzeug vom Spreizsitz- Typ nach zumindest einem der Ansprüche 1 bis 6, **dadurch gekennzeichnet, dass** das Abdeckteil (100, 203) eine Außenluft- Ansaugöffnung (122) hat, durch die Außenluft in den wärmeisolierenden Raum (123) einführbar ist, und eine Luftabgabeöffnung (124), die mit der Wärmeabgabevorrichtung (120) in Verbindung ist, und / oder **dadurch**, dass das Abdeckteil (100, 203) zumindest einen Vorsprung (126) hat, der in den wärmeisolierenden Raum (123) vorspringt, wobei vorzugsweise der Vorsprung (126) benachbart zu der Luftabgabeöffnung (124) installiert ist.

8. Fahrzeug vom Spreizsitz- Typ nach zumindest einem der Ansprüche 1 bis 7, **dadurch gekennzeichnet, dass** das Gehäuse (120c) ein oberes Gehäuseteil (120a) und ein unteres Gehäuseteil (120b), das mit dem oberen Gehäuseteil (120a) gekuppelt ist, aufweist, wobei vorzugsweise das obere Gehäuseteil (120a) eine Ansaugöffnung (120a1) hat, die mit dem wärmeisolierenden Raum (123) in Verbindung ist, und wobei das untere Gehäuseteil (120b) die Abgabeöffnung (120b1) hat.

9. Fahrzeug vom Spreizsitz- Typ nach zumindest einem der Ansprüche 1 bis 8, **dadurch gekennzeichnet, dass** die Lüftereinheit (121) einen Lüfter (121a) und einen Elektromotor (121 b) zum Drehen des Lüfters aufweist, wobei vorzugsweise der Elektromotor (121 b) an dem hinteren Rahmen (118, 225) durch ein Elektromotor - Befestigungsteil (121c) befestigt ist, wobei außerdem vorzugsweise das Elektromotor - Befestigungsteil (121c) eine Öffnung (121d) an einer Position hat, die der Ansaugöffnung entspricht.

10. Fahrzeug vom Spreizsitz- Typ nach zumindest einem der Ansprüche 1 bis 9, **dadurch gekennzeichnet, dass** ein Katalysator (130) zum Reinigen von Abgas der Brennkraftmaschine (106, 210) zwischen der Brennkraftmaschine (106, 210) und dem Schalldämpfer (115, 220), vorzugsweise näher an der Brennkraftmaschine (106, 210) als zu einer Luftabgabeöffnung (124) des Schalldämpfers (115, 220), installiert ist.

## Revendications

1. Véhicule du type à selle comprenant :
un châssis (101, 208), une roue arrière (108, 211) rotative qui est fixée au châssis (101, 208),
un moteur (106, 210) installé sur le châssis (101, 208),
un pot d'échappement (115, 220, 220) relié à un tuyau d'échappement (113, 213) qui s'étend vers l'arrière à partir du moteur (106, 210),
un élément de recouvrement (100, 203) pour entourer axialement, au moins en partie, le pot d'échappement (115, 220) est prévu, un espace d'isolation thermique (123) étant défini entre le pot d'échappement (115, 220) et l'élément de recouvrement (100, 203) pour isoler la chaleur du pot d'échappement (115, 220),
un dispositif d'évacuation de chaleur (120) conçu pour communiquer avec ledit espace d'isolation (123) et pour évacuer dudit espace d'isolation (123) une chaleur existant dans celui-ci,
**caractérisé en ce que** le dispositif d'évacuation de chaleur (120) comprend une unité de ventilateur (121) dans un carter (120c) présentant une ouverture d'évacuation (120b1) par laquelle la chaleur est évacuée vers l'extérieur, l'unité de ventilateur (121) crée une zone de basse pression près de ladite ouverture d'évacuation (120b1).

2. Véhicule du type à selle selon la revendication 1, **caractérisé en ce qu'**un siège (110) pour un motocycliste est installé au-dessus de la roue arrière (108, 211), et/ou en ce que le pot d'échappement (115, 220) est globalement cylindrique, et/ou **en ce que** le pot d'échappement (115, 220) et/ou le tuyau d'échappement (113, 213) s'étendent en biais vers le haut en direction d'une partie arrière du véhicule, et/ou **en ce que** le dispositif d'évacuation de chaleur (120) est conçu pour pouvoir évacuer la chaleur vers la roue arrière (108, 211).

3. Véhicule du type à selle selon les revendications 1 et 2, **caractérisé en ce que** le châssis (101, 208) comprend un châssis arrière (118, 225) qui est installé au-dessus de la roue arrière (108, 211), le pot d'échappement (115, 220) est disposé à l'extérieur du châssis arrière (118, 225) dans le sens de la largeur du véhicule, étant précisé que le dispositif d'évacuation de chaleur (120) est de préférence disposé dans un espace qui est entouré par le pot d'échappement (115, 220), la roue arrière (108, 211) et/ou le châssis arrière (118, 225).

4. Véhicule du type à selle selon l'une au moins des revendications 1 à 3, **caractérisé en ce que** ladite ouverture d'évacuation est disposée dans une paroi inférieure du carter (120c).

5. Véhicule du type à selle selon l'une au moins des revendications 1 à 4, **caractérisé en ce que** le pot d'échappement (115, 220) comprend plusieurs pots d'échappement (115, 220, 115, 220), étant précisé qu'un châssis arrière (118, 225) du véhicule est de préférence installé entre ces pots d'échappement (115, 220, 115, 220).

6. Véhicule du type à selle selon l'une au moins des revendications 1 à 5, **caractérisé en ce que** l'unité de ventilateur (121) est installée sous un centre d'un orifice d'échappement (115, 220b) du pot d'échappement (115, 220) par lequel les gaz d'échappement du moteur (106, 210) peuvent être évacués vers l'extérieur.

7. Véhicule du type à selle selon l'une au moins des revendications 1 à 6, **caractérisé en ce que** l'élément de recouvrement (100, 203) a un orifice d'aspiration d'air extérieur (122) par lequel l'air extérieur est apte à être introduit dans l'espace d'isolation thermique (123), et un orifice d'évacuation d'air (124) qui communique avec le dispositif d'évacuation de chaleur (120), et/ou **en ce que** l'élément de recouvrement (100, 203) a au moins une saillie (126) qui dépasse dans l'espace d'isolation thermique (123), étant précisé que la saillie (126) est de préférence installée près de l'orifice d'évacuation d'air (124).

8. Véhicule du type à selle selon l'une au moins des revendications 1 à 7, **caractérisé en ce que** le carter (120c) comprend une partie de carter supérieure (120a) et une partie de carter inférieure (120b) qui est accouplée à celle-ci, étant précisé que la partie de carter supérieure (120a) a de préférence une ouverture d'aspiration (120a1) qui communique avec l'espace d'isolation thermique (123) et que la partie de carter inférieure (120b) a l'ouverture d'évacuation (120b1).

9. Véhicule du type à selle selon l'une au moins des revendications 1 à 8, **caractérisé en ce que** l'unité de ventilateur (121) comprend un ventilateur (121a) et un moteur électrique (121b) pour faire tourner celui-ci, étant précisé que le moteur électrique (121b) est de préférence fixé au châssis arrière (118, 225) par un élément de fixation de moteur électrique (121c), étant précisé, plus spécialement, que l'élément de fixation de moteur électrique (121c) a une ouverture (121d) à un endroit qui correspond à l'ouverture d'aspiration.

10. Véhicule du type à selle selon l'une au moins des revendications 1 à 9, **caractérisé en ce qu'**un catalyseur (130) pour purifier les gaz d'échappement du moteur (106, 210) est installé entre le moteur (106, 210) et le pot d'échappement (115, 209), de préférence plus près du moteur (106, 210) que d'un orifice d'évacuation d'air (124) du pot d'échappement (115, 220).
